# EUROPEAN PATENT APPLICATION

(11) **EP 4 321 451 A1**
(43) Date of publication of application: **14.02.2024**
(21) Application number: 23188580.7
(22) Date of filing: 31.07.2023
(51) Int. Cl.: B65D 51/16, A47J 47/02

(54) **STORAGE CONTAINER FOR AIRTIGHT STORAGE OF FOOD**

(30) Priority: 09.08.2022 NL 2032704
(71) Applicant: Mepal B.V., 7241 MB Lochem (NL)
(72) Inventor: VAN ES, Simon, 7241MB Lochem (NL); BOTER, Jasper, 7241MB Lochem (NL)
(74) Representative: Mink-Lindenburg, Charlotte Hildegard

(57) **Abstract**

The invention relates to a storage container (1) for airtight storage of food, comprising a container base (10) having a top edge (11) defining an upper opening and a removable cover (20) provided with a circumferential seal (22) arranged to fit in the base and having a peripheral edge (21) arranged to rest on the top edge in a closed position, wherein the cover closes the base. The cover further comprises an operating element (3) that is pivotably arranged and comprises a gripping part (32) for moving the operating element between a rest position and a position of use. The operating element further comprises a support part (31) that pushes against the top edge (11) during movement of the operating element from the rest position to the position of use.

The invention also relates to the cover (20) described as part of the storage container (1) according to the invention.

## Description

The invention relates to a storage container for airtight storage of food, comprising a container base having a top edge defining an upper opening and a removable cover provided with a circumferential seal arranged to fit in the base and having a peripheral edge arranged to rest on the top edge in a closed position, wherein the cover closes the base, wherein the cover further comprises an operating element that is pivotably arranged and comprises a gripping part for moving the operating element between a rest position and a position of use.

Such a storage container is known in the field, for instance from DE202005020035 and WO0246062. In each of the known containers the operating element serves to regulate the pressure between the surrounding atmosphere and the inside of the container. Thereto the cover comprises a venting opening and the operating element comprises a sealing member for the venting opening. In order to open each of the known containers, a user first has to manipulate the operating element to release the pressure in the container. Only then the user can remove the cover from the base, for instance by pulling on the sides of the cover.

The invention has for its object to provide a container of the type stated in the preamble which can be opened easier and faster.

The storage container according to the invention has for this purpose the features that the operating element further comprises a support part, wherein the support part pushes against the top edge during movement of the operating element from the rest position to the position of use, such that the operating element assists in removing the cover from the base.

According to the invention the operating element assists in lifting the cover of the base during movement from the rest position into the position of use. The operating element thereby acts as a lever supporting on the base.

According to a first preferred embodiment of the storage container according to the invention the cover comprises a venting opening and the operating element is provided with a sealing member for the venting opening. Advantageously both the regulation of the pressure in the container and the removal of the cover can be achieved in one action by handling the operating element.

According to an elaboration of the first preferred embodiment of the storage container according to the invention the operating element can assume a ventilation position, wherein the sealing element leaves the venting opening free while the cover closes the base. This ventilation position is specifically suitable for heating food in the microwave.

In a further preferred embodiment of the storage container according to the invention the cover and the operating element are provided with first pivoting elements that provide a first pivoting point. The first pivoting elements are preferably detachable. More specifically, the first pivoting elements are detached in the rest position.

In a user-friendly preferred embodiment of the storage container according to the invention the first pivoting elements provide a click connection. The click connection provides a user with audible feedback when the operating element assumes the rest position or the position of use. Preferably the first pivoting elements comprise a hook and shaft. Said first pivoting elements are wear-resistant and durable.

According to a practical elaboration of the further preferred embodiment the cover and the support part are provided with cooperating second pivoting elements. The second pivoting elements provide a second pivoting point when the operating element returns to the rest position and the first pivoting elements become detached. Preferably the second pivoting elements comprise pairs of a cam and a hole for accommodating the cam.

In an elegant, preferred embodiment of the storage container according to the invention the peripheral edge comprises a cut out for accommodating the support part of the operating element. The support part forming part of the peripheral edge contributes to an elegant design.

According to another elegant, preferred embodiment of the storage container according to the invention the cover comprises a recessed space for accommodating the gripping part of the operating element in the rest position. In the rest position the operating element lays flush with the surface of the cover. Preferably the length of the recessed space is larger than the length of the gripping part thus providing easy access to the gripping part.

The base of the storage container according to the invention can be made of various materials, such as plastic, glass, (stainless) steel, ceramics, wood or bamboo.

The invention also relates to a cover described as part of the storage container according to the invention.

The invention will now be described in more detail with reference to the following figures.
Figure 1A shows a schematic view of a storage container according to the present invention;
Figure 1B shows the storage container of figure 1A in exploded view;
Figure 2A shows the storage container of figure 1A in cross section in a closed position;
Figure 2B shows the storage container of figure 2A in a ventilation position; and
Figure 2C shows the storage container of figure 2A in a position of use.

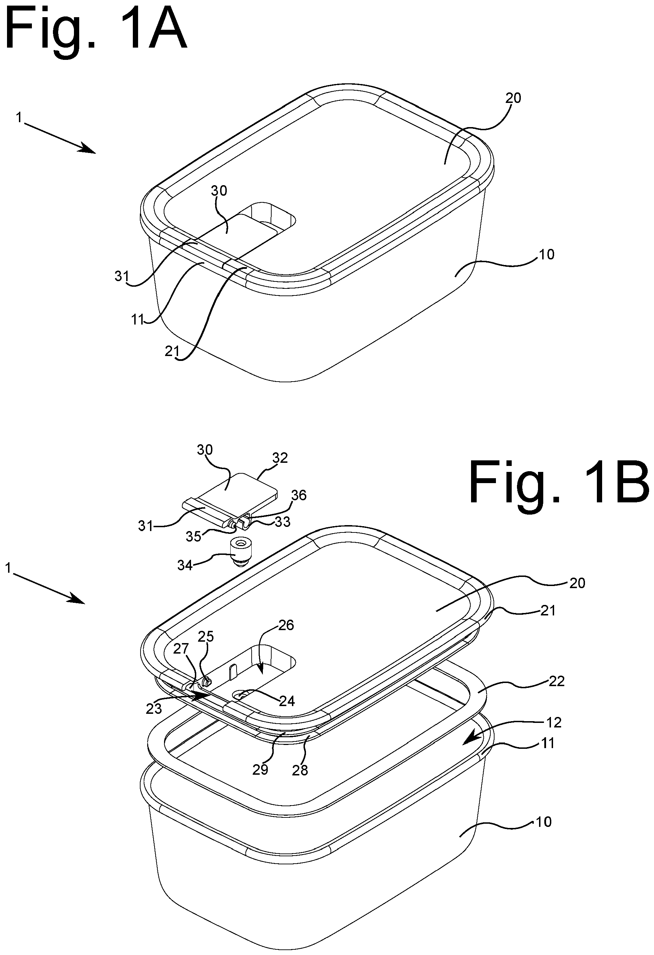

Figure 1A shows a schematic view of a preferred embodiment of a storage container 1 according to the invention. Figure 1B shows the storage container 1 in exploded view. The storage container 1 is particularly suitable for airtight storage of food. The storage container 1 comprises a container base 10 and a removable cover 20 carrying a circumferential seal 22 arranged to fit airtight in the base 10. The base 10 has an upper opening 12 defined by a top edge 11. The cover 20 has a peripheral edge 21 arranged to rest on the top edge 11 in the closed position as shown in figure 1A.

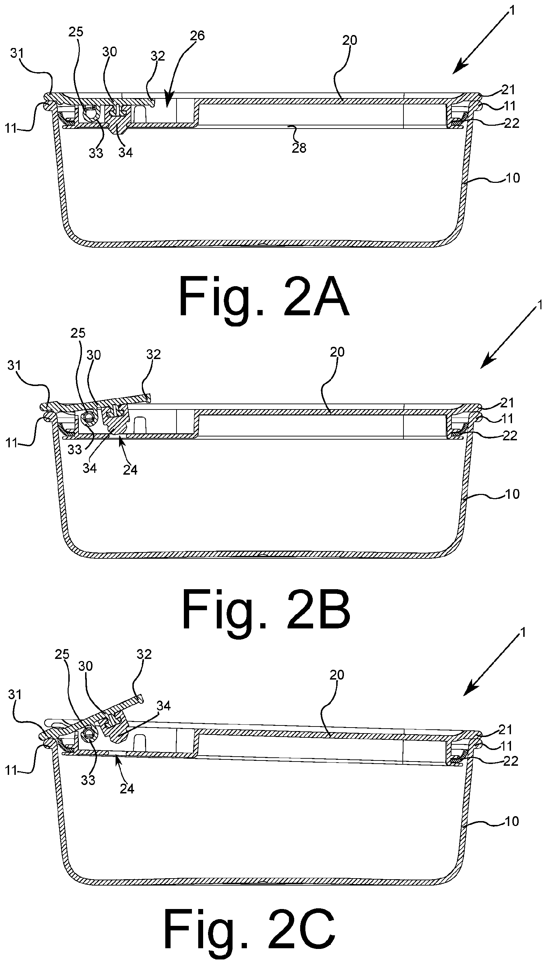

The container 1 further comprises an operating element or clip 30 that is pivotably arranged in the cover 20. The operating element 30 comprises a support part 31 and a gripping part 32 that allows a user to handle the operating element 30 and move it between three different positions shown in figures 2A, 2B and 2C.

Figure 2A shows the storage container 1 in cross section in a closed position, wherein the cover 20 closes off the base 10 in an airtight manner. The operating element 30 takes up a rest position.

Figure 2B shows the storage container 1 in a closed position but here the operating element 30 takes up a ventilation position.

Figure 2C shows the storage container 1 in an open position with the operating element 30 in a position of use. In the position of use the operating element 30 functions as a lever to lift the cover 20 of the base 10.

The cover 20 and the operating element 30 are provided with first pivoting elements 25, 33. The first pivoting elements are detachable and for example comprise two shafts 25 and a hook 33. In the rest position of the operating element 30 the first pivoting elements are disconnected, as can be seen in figure 2A.

During raising of the operating element 30 by pulling the gripping part 32 upwards the support part 31 pushes against the top edge 11 and the first pivoting elements 25, 33 connect to form a hinge. This is shown in figure 2B. The first pivoting elements 25, 33 preferably provide a click connection. Thereto the hook 33 comprises a thickened part or ridge 36.

When pulling the gripping part 32 further upwards, the operating element 30 functions as a lever to lift the cover 20 of the base 10, as is shown in figure 2C.

The cover 20 and the operating element 30 are further provided with cooperating second pivoting elements 27, 35 that assist in the return of the operating element 30 from the position of use into the rest position after the cover 20 has been put back on the base 10. The second pivoting elements 27, 35 for example comprise cooperating pairs of holes 27 and cams 35. During lowering of the operating element 30 by pushing the gripping part 32 downwards the first pivoting elements 25, 33 can disconnect.

The cover 20 comprises a venting opening 24 and the operating element 30 is provided with a plug 34 to close the venting opening 24. In the ventilation position the plug 34 is raised out of the venting opening 24 while the cover 20 still closes the base 10.

The cover 20 comprises a recessed space 26 for accommodating the operating element 30 in the rest position. The support part 31 forms part of the peripheral edge 21. In the rest position the operating element 30 is integrated in the cover 20. The length of the recessed space 26 is larger than the length of the operating element 30.

In the preferred embodiment shown the cover 20 comprises a pair of lower edges 28, 29 that follow the circumference of the peripheral edge 21 but have smaller dimensions. The seal 22 is situated between the lower edges 28 and 29. A suitable seal 22 is made of flexible material. Preferably the seal 22 is generally flat and follows the circumference of the peripheral edge 21 but has larger dimensions. Consequently, in the closed position the seal 22 is curved in a direction towards the peripheral edge 21. The seal 22 renders the storage container 1 airtight and leak proof.

The peripheral edge 21 comprises a cut out 23 for accommodating the support part 31 of the operating element 30. The cut out 23 and the support part 31 are provided with the cooperating second pivoting elements.

The cover 20 can fit on a variety of container bases 10 made of various materials, such as plastic, glass or stainless steel. Examples of other suitable materials are enamelled steel, ceramics, wood or bamboo.

In the preferred embodiment shown a set of bases 10 is stackable. Several storage containers 1 with covers in the closed position are also stackable due to the operating element lying flush with the surface of the cover.

The inventive thought lies in providing a sealing cover of an airtight storage container with an integrated operating element functioning as a lever for easy removal of the sealing cover from the container base. A further inventive thought resides in adding to such an operating element a sealing member for a venting opening in the cover thus adding a pressure relief function. In the preferred embodiment the operating element has no fixed pivoting point which contributes to the user-friendliness.

The invention is not limited to the embodiment described and shown herein but the invention relates generally to any embodiment falling within the scope of protection as defined in the claims and as seen in the light of the foregoing description and accompanying drawings.

## Claims

1. Storage container for airtight storage of food, comprising a container base having a top edge defining an upper opening and a removable cover provided with a circumferential seal arranged to fit in the base and having a peripheral edge arranged to rest on the top edge in a closed position, wherein the cover closes the base, wherein the cover further comprises an operating element that is pivotably arranged and comprises a gripping part for moving the operating element between a rest position and a position of use, **characterised in that** the operating element further comprises a support part, wherein the support part pushes against the top edge during movement of the operating element from the rest position to the position of use.

2. Storage container according to claim 1, wherein the cover comprises a venting opening and the operating element is provided with a sealing member for the venting opening.

3. Storage container according to claim 2, wherein the operating element can assume a ventilation position, wherein the sealing element leaves the venting opening free in the closed position of the cover.

4. Storage container according to one or more of the preceding claims, wherein the cover and the operating element are provided with first pivoting elements defining a first pivoting point.

5. Storage container according to claim 4, wherein the first pivoting elements are detachable.

6. Storage container according to claim 5, wherein the first pivoting elements are detached in the rest position of the operating element.

7. Storage container according to claim 5 or 6, wherein the first pivoting elements provide a click connection.

8. Storage container according to one or more of the preceding claims 4 - 7, wherein the first pivoting elements comprise a hook and a shaft.

9. Storage container according to one or more of the preceding claims, wherein the cover and the support part are provided with cooperating second pivoting elements defining a second pivoting point.

10. Storage container according to claim 9, wherein the second pivoting elements comprise pairs of a cam and a hole for accommodating the cam.

11. Storage container according to claim one or more of the preceding claims, wherein the peripheral edge comprises a cut out for accommodating the support part of the operating element.

12. Storage container according to one or more of the preceding claims, wherein the cover comprises a recessed space for accommodating the gripping part of the operating element in the rest position.

13. Storage container according to claim 12, wherein the length of the recessed space is larger than the length of the gripping part.

14. Storage container according to one or more of the preceding claims, wherein the base is made of plastic, glass, or (stainless) steel, ceramics, wood or bamboo.

15. Cover as described as part of the storage container according to one or more of the preceding claims.
